# EUROPEAN PATENT SPECIFICATION

(11) **EP 0 923 979 B1**
(45) Date of publication and mention of the grant of the patent: **17.09.2003**
(21) Application number: 98204266.5
(22) Date of filing: 16.12.1998
(51) Int. Cl.: B01D 53/68

(54) **Electrical device with active filter for chemically neutralizing reactive products**
Elektrische Vorrichtung mit einem Aktivfilter zur chemischen Neutralisierung von reaktiven Verbindungen
Dispositif électrique avec un filtre actif pour la neutralisation chimique de produits réactifs

(30) Priority: 18.12.1997 IT MI972804
(43) Date of publication of application: 23.06.1999
(73) Proprietor: ABB SACE S.p.A., I-24100 Bergamo (IT)
(72) Inventor: Volponi, Silvia, 20033 Desio (MI) (IT); Bertazzi, Arnaldo, 20052 Monza (MI) (IT)
(74) Representative: Giavarini, Francesco

(56) References cited:
- EP-A- 0 629 437
- EP-A- 0 828 258
- DE-A- 19 609 570

## Description

The present invention relates to an electrical device which contains an active filter for chemically neutralizing reactive products generated by the decomposition of fluoridized dielectric fluids.

Fluoridized dielectric fluids are commonly used as electrical insulation medium and/or electric arc quenching medium in various kinds of electrical device, such as for example circuit breakers, transformers, switches, control panels, pressurized units and other devices related to electric power. Said fluoridized dielectric fluids, such as for example perfluoropolyethers (PFPE), perfluorocarbons (PFC), pure or mixed sulfur hexafluoride (SF₆), subjected to thermal decomposition or in the presence of an electric arc or electrical corona undergo a decomposition which generates chemically reactive byproducts which can exist both in the gaseous phase and dissolved in the liquid phase.

According to the current state of the art, the treatment of these chemically reactive decomposition substances produced inside electrical devices still has problems. For example, in circuit breakers using fluoridized gases (pure or mixed SF₆), the reactive decomposition products generated by the decomposition of the gas following an electric arc or corona are collected in molecular sieves or passive filters, such as zeolites, activated alumina or activated charcoals.

However, since these filters or sieves are passive elements, they accumulate the toxic and reactive species internally, leaving them chemically unchanged.

Accordingly, the used filter is a toxic and noxious product which requires the use of a disposal procedure which is specific for toxic and noxious waste.

The aim of the present invention is to provide an electrical device which comprises a fluoridized dielectric fluid as a medium for insulation and/or for quenching an electric arc and a filter for treating chemically reactive and toxic gaseous species originating from the corona decomposition of said fluoridized dielectric fluid, characterized in that the filter comprises a substrate and chemically active means for neutralizing said chemically reactive and toxic gaseous species, said chemically active means comprising a primary or secondary amine, and in that it comprises a containment means for said active filter, said containment means being chemically inert and gas-permeable.

The electrical device according to the invention accordingly has the enormous advantage of having an active filter which does not merely store the toxic species internally but reacts chemically with them, converting them into inert substances. In this manner, the filter is no longer a toxic product and therefore at replacement time it does not entail dealing with the problems related to toxic and noxious waste disposal.

Further characteristics and advantages of the invention will become apparent from the description of preferred but not exclusive embodiments of the electrical device according to the invention.

A first embodiment of the electrical device according to the invention is provided by using, as active means for neutralizing said chemically reactive and toxic species, a substance of the Jeffamine chemical family adsorbed on a substrate. Merely by way of example, said substance can be the one known commercially as T 403 and produced by the Texaco Chemical Company, adbsorbed on a substrate which can be constituted by Chromosorb, alumina or a zeolite which is resistant to an acid environment. The substance of the Jeffamine family that is used is used is in liquid form and once it is supported on Chromosorb, alumina or zeolite it assumes the form of granules whose diameter depends on the substrate chosen and is usually a few millimeters. These granules are placed in a suitable containment means, made of inert and gas-permeable material, so as to obtain the active filter included in the electrical device according to the invention.

Said containment means, by way of example, can be constituted by a bag made of an ethylene-chlorotrifluoroethylene copolymer (Halar).

The electrical device contains the fluoridized dielectric fluid as insulating and/or electric arc quenching medium. For example, following the occurrence of an electric arc or electric corona or due to a thermal effect, the fluoridized dielectric fluid decomposes inside said electrical device, producing various toxic and reactive chemical species. The reactive decomposition products are fluoridized substances, generally highly acid fluoridized gases which, depending on whether the dielectric fluid is a gas or a liquid, can occur in the gaseous phase or can be dissolved in the fluoridized dielectric fluid. In particular, the reactive decomposition products of sulfur hexafluoride (SF₆) are mainly HF, SF₄, SO₂F₂, SOF₂, SOF₄ and WF₆. The toxic byproducts of perfluoropolyether (PFPE) are mainly COF₂, HF, PFIB and the toxic byproducts of the decomposition of perfluorocarbon (PFC) are PFIB and HF. The substances that constitute the byproducts of the decomposition of the various mentioned dielectric fluids are acids and accordingly react with a strong base. The endgroups of the Jeffamine molecule constitute a strong base; accordingly, when, inside the electrical device, said reactive and toxic byproducts make contact with the active filter a typical reaction of an acid with an amine occurs: the reactive molecules bind chemically to the Jeffamine molecule and inert and non-toxic products are formed.

Another advantage of the use of Jeffamine is the fact that the molecules of this substance are able to break double bonds and are therefore capable of chemically destroying PFIB.

Furthermore, zeolite, when present, gives the active filter the additional ability to adsorb the byproducts, which, despite being inert from the toxicological point of view, hinder the normal operation of the liquids and gases as arc quenching medium or as dielectric. In this manner, the electrical device according to the invention also has the advantage that it ensures functionality during operation.

Another embodiment of the electrical device according to the invention is provided by using, as means for neutralizing said chemically reactive and toxic species, a substance of the Jeffamine chemical family adsorbed on a substrate, such as Chromosorb or alumina, used together with a zeolite which is resistant to an acid environment. In this case, the zeolite not only allows to adsorb those byproducts which, despite being toxicologically inert, hinder the normal operation of the fluoridized fluids, but also actively cooperates with the Jeffamine in the chemical neutralization of these toxic substances. As in the previous embodiment, the means for neutralizing said chemically reactive and toxic substances, once they have been adsorbed onto the substrate, assume the form of granules whose diameter depends on the substrate chosen. Said granules are placed in a suitable containment means constituted by inert and gas-permeable material, so as to obtain the active filter included in the electrical device according to the invention. In this embodiment also, said containment means can be constituted by a bag made of ethylene-chlorotrifluoroethylene copolymer (Halar).

The active filter is placed in the volume occupied by the fluoridized fluid, whether liquid or gaseous. Generally, however, the decomposition of the fluoridized dielectric fluids is accompanied by an overpressure in the electrical device due both to chemical decomposition and to the phenomenon that causes it. In order to avoid problems in case of unwanted high pressure values, the gases produced by the decomposition of the fluid can be collected in a collector valve or in an expansion chamber; usually there is also a safety valve which allows to vent the gases directly externally through a suitable duct. According to the situations and as convenient, the active filter can be placed in the collector valve, in the expansion chamber or in the safety valve vent duct; as an alternative, it is possible to use multiple filters simultaneously, for example one located directly in the fluoridized fluid and one in the expansion chamber or in the collector valve or in the vent duct.

## Claims

1. An electrical device comprising a fluoridized dielectric fluid as a medium for insulation and/or for quenching an electric arc and at least one filter for treating chemically reactive gaseous species generated by the decomposition of the fluoridized dielectric fluid, **characterized in that** the filter comprises:
-- a substrate;
-- chemically active means for neutralizing said chemically reactive species, said chemically active means comprising a primary or secondary amine, and **in that** it comprises a containment means for said active filter, said containment means being chemically inert and gas-permeable.

2. An electrical device according to claim 1, **characterized in that** the substrate is constituted by alumina.

3. An electrical device according to claim 1, **characterized in that** the substrate is constituted by a zeolite which is resistant to an acid environment.

4. An electrical device according to claim 1, **characterized in that** said containment means is an ethylene-chlorotrifluoroethylene copolymer bag.

5. An electrical device according to one or more of the preceding claims, **characterized in that** said filter for treating one or more chemically reactive gaseous species is contained in a valve for collecting the gases generated by the decomposition of a fluoridized dielectric fluid.

6. An electrical device according to claims 1 to 4, **characterized in that** said filter for treating one or more chemically reactive gaseous species is contained in a safety valve with a duct for discharging externally the gases generated by the decomposition of a fluoridized dielectric fluid.

7. An electrical device according to claims 1 to 4, **characterized in that** said filter for treating one or more chemically reactive gaseous species is contained in a chamber for the expansion of the gases generated by the decomposition of a fluoridized dielectric fluid.

8. A filter for treating chemically reactive gaseous species generated by the decomposition of a fluoridized dielectric fluid, particularly for electrical devices, **characterized in that** it comprises a substrate, chemically active means for neutralizing said chemically reactive species, said chemically active means comprising a primary or secondary amine, and a containment means, said containment means being chemically inert and gas-permeable

## Patentansprüche

1. Elektrische Vorrichtung, umfassend ein fluoridisiertes dielektrisches Fluid als Mittel zur Isolierung und/oder zum Löschen eines Lichtbogens und wenigstens einen Filter zur Behandlung chemisch reaktiver gasförmiger Verbindungen, die bei der Zersetzung des fluoridisierten dielektrischen Fluids entstehen, **dadurch gekennzeichnet, dass** der Filter
- ein Substrat und
- ein chemisch aktives Mittel zur Neutralisierung der chemisch reaktiven Verbindungen umfasst, wobei das chemisch aktive Mittel ein primäres oder sekundäres Amin enthält,
und dass die Vorrichtung eine Behältereinrichtung für den Aktivfilter umfasst, wobei die Behältereinrichtung chemisch inert und gasdurchlässig ist.

2. Elektrische Vorrichtung nach Anspruch 1, **dadurch gekennzeichnet, dass** das Substrat aus Aluminiumdioxid besteht.

3. Elektrische Vorrichtung nach Anspruch 1, **dadurch gekennzeichnet, dass** das Substrat aus einem Zeolith besteht, der gegen eine saure Umgebung beständig ist.

4. Elektrische Vorrichtung nach Anspruch 1, **dadurch gekennzeichnet, dass** die Behältereinrichtung ein Ethylen-Chlorfluortrifluorethylen-Copolymer-Beutel ist.

5. Elektrische Vorrichtung nach einem der vorstehenden Ansprüche, **dadurch gekennzeichnet, dass** der Filter zur Behandlung ein oder mehrerer chemisch reaktiver gasförmiger Verbindungen in einem Auffangventil für die bei der Zersetzung eines fluoridisierten dielektrischen Fluids erzeugten Gase enthalten ist.

6. Elektrische Vorrichtung nach Anspruch 1 bis 4, **dadurch gekennzeichnet, dass** der Filter zur Behandlung ein oder mehrerer chemisch reaktiver gasförmiger Verbindungen in einem Sicherheitsventil mit einem Rohr zum Ableiten der bei der Zersetzung eines fluoridisierten dielektrischen Fluids erzeugten Gase nach außen enthalten ist.

7. Elektrische Vorrichtung nach Anspruch 1 bis 4, **dadurch gekennzeichnet, dass** der Filter zur Behandlung ein oder mehrerer reaktiver gasförmiger Verbindungen in einem Expansionsgefäß für die bei der Zersetzung eines fluoridisierten dielektrischen Fluids erzeugten Gase enthalten ist.

8. Filter zur Behandlung chemisch reaktiver Gase, die bei der Zersetzung eines fluoridisierten dielektrischen Fluids entstehen, insbesondere für elektrische Vorrichtungen, **dadurch gekennzeichnet, dass** er ein Substrat, ein chemisch aktives Mittel zur Neutralisierung der chemisch reaktiven Verbindungen, welches ein primäres oder sekundäres Amin enthält, und eine Behältereinrichtung, welche chemisch inert und gasdurchlässig ist, umfasst.

## Revendications

1. Un dispositif électrique comprenant un fluide diélectrique fluoré comme moyen pour l'isolation et/ou pour le refroidissement d'un arc électrique et au moins un filtre pour traiter les espèces gazeuses chimiquement réactives générées par la décomposition du fluide diélectrique fluoré, **caractérisé en ce que** le filtre comprend :
- un substrat
- un moyen chimiquement actif pour neutraliser lesdites espèces chimiquement réactives, ledit moyen chimiquement actif comprenant un amine primaire ou secondaire, et **en ce qu'**il comprend un moyen de confinement dudit filtre actif, ledit moyen de confinement étant chimiquement inerte et perméable au gaz.

2. Un dispositif électrique selon la revendication 1, **caractérisé en ce que** le substrat est constitué d'alumine.

3. Un dispositif électrique selon la revendication 1, **caractérisé en ce que** le substrat est constitué d'une zéolite qui est résistante à un environnement acide.

4. Un dispositif électrique selon la revendication 1, **caractérisé en ce que** ledit moyen de confinement est un sac en copolymère d'éthylène-chlorotrifluoroéthylène.

5. Un dispositif électrique selon une ou plusieurs des revendications précédentes, **caractérisé en ce que** ledit filtre pour traiter une ou plusieurs espèces gazeuses chimiquement réactives est contenu dans une vanne pour collecter les gaz générés par la décomposition d'un fluide diélectrique fluoré.

6. Un dispositif électrique selon les revendications 1 à 4, **caractérisé en ce que** ledit filtre pour traiter une ou plusieurs espèces gazeuses chimiquement réactives est contenu dans une soupape de sécurité munie d'un conduit pour évacuer vers l'extérieur les gaz générés par la décomposition d'un fluide diélectrique fluoré.

7. Un dispositif électrique selon les revendications 1 à 4, **caractérisé en ce que** ledit filtre pour traiter une ou plusieurs espèces gazeuses chimiquement réactives est contenu dans une chambre pour l'expansion des gaz générés par la décomposition d'un fluide diélectrique fluoré.

8. Un filtre pour traiter des espèces gazeuses chimiquement réactives générées par la décomposition d'un fluide diélectrique fluoré, particulièrement pour des dispositifs électriques, **caractérisé en ce qu'**il comprend un substrat, un moyen chimiquement actif pour neutraliser lesdites espèces chimiquement réactives, ledit moyen chimiquement actif comprenant un amine primaire ou secondaire, et un moyen de confinement, ledit moyen de confinement étant chimiquement inerte et perméable au gaz.
